Europäisches Patentamt

European Patent Office

Office européen des brevets

(11) Publication number: **0 112 918**
**B1**

# EUROPEAN PATENT SPECIFICATION

(45) Date of publication of patent specification: **07.01.88**

(21) Application number: **83902547.5**

(22) Date of filing: **11.07.83**

(86) International application number:
**PCT/US83/01045**

(87) International publication number:
**WO 84/00400 02.02.84 Gazette 84/03**

(51) Int. Cl.⁴: **F 02 M 21/02, F 02 B 43/00**

(54) **CONTROL VALVE FOR A GAS FUEL SUPPLY TO AN INTERNAL COMBUSTION ENGINE AND METHOD FOR USING THE CONTROL VALVE.**

(30) Priority: **12.07.82 US 397168**

(43) Date of publication of application:
**11.07.84 Bulletin 84/28**

(45) Publication of the grant of the patent:
**07.01.88 Bulletin 88/01**

(84) Designated Contracting States:
**BE CH DE FR GB LI NL SE**

(56) References cited:
**DE-C- 918 299**
**US-A-2 150 764**
**US-A-2 279 530**
**US-A-2 311 315**
**US-A-2 928 382**
**US-A-3 443 551**
**US-A-3 698 365**
**US-A-3 895 618**
**US-A-3 948 224**

(73) Proprietor: **PROPANE CARBURETION SYSTEMS, INC.**
**3190 South East Dominica Terrace**
**Stuart FL 33495-2677 (US)**

(72) Inventor: **LAGANO, Thomas**
**481 Mars Way**
**Juno Beach, FL 33408 (US)**
Inventor: **BATCHELOR, William, H.**
**10410 A1A Unit 308**
**Jensen Beach, FL 33457 (US)**

(74) Representative: **Leale, Robin George et al**
**FRANK B. DEHN & CO. Imperial House**
**15-19 Kingsway**
**London WC2B 6UZ (GB)**

Courier Press, Leamington Spa, England.

## Description

The present invention is directed to a control valve for a gas fuel supply to an internal combustion engine and a method for using the control valve. The valve is particularly suitable for a dual fuel (liquid and gaseous) operation of an internal combustion engine.

The device allows in a dual fuel system the use of lower cost gas fuel such as propane in combination with the use of, for example, diesel fuel. It has been found that propane increases the efficiency of a diesel engine, thereby allowing a prospective diesel engine purchaser to purchase a smaller engine to do substantially the same work as a large engine counterpart running on diesel fuel alone. Also, the addition of propane causes a more complete combustion of diesel fuel entering the engine. This has been noted by a marked drop in the exhaust temperature in a diesel engine after propane has been drawn in and the throttle setting has been adjusted to produce the same torque as it was with a diesel fuel alone. Due to the more complete combustion of the diesel fuel, pollution is greatly reduced by reducing the amount of the unburned diesel fuel previously passed through the exhaust system. This is also an important ecological consideration. The mixing valve unit of the present invention is designed to supply propane or other gas that has been vaporized into the intake air of the engine. The unit is designed to meter the gas in proportion to the air demanded by the engine.

There is known from US—A—2311315 a control valve according to the preamble of claim 1. However this control valve has a disadvantage in that gas fuel is wasted in certain circumstances since it is not possible to close the valve element independently of the position of the air flow responsive member and gas fuel may be supplied when it is not desired.

Accordingly the present invention is characterised in that the connection between the valve element and the flow responsive member allows movement independently of the air flow responsive member movement between the closed position of the valve element and a position defined by the deflected position of the air flow responsive member; and in that a valve element control is provided for moving said valve element towards and maintaining same at a closed position independently of the biasing means without interference with the movement of the air flow responsive member.

The provision of a lost motion connection between the air flow responsive member and the valve element enables the valve element to be moved between open and closed positions independently of movement of the air flow responsive member. Furthermore the provision of a positive control for maintaining the valve element in a closed position independently of and without interference with the movement of the air flow responsive member means that the air flow responsive member can be deflected in response to air flowing to- the engine air intake conduit, without movement of the valve element.

The control valve comprises a rigid rod connector extending between the air flow responsive member and the valve element, the rod connector engaging the valve element in such a manner that the rod connector can move independently of the valve element when the rod connector moves in a direction corresponding to the direction of motion of the air responsive member when air is flowing to the engine. However, the connection between the rod connector and the valve element causes the valve element to be directly engaged by and carried with the rod when the latter is moved in a reverse direction as the air responsive member approaches its undeflected, at rest position.

The fuel supply system according to the preferred embodiment utilizes the above-described control valve and moreover provides a connection between the engine speed controller (throttle of the engine) and the valve element for controlling the gas fuel flow within the housing, whereby closure of the throttle causes the valve element to return to a closed position without interference with the relative position of the air flow responsive member.

The method for carrying out the supply of a gaseous secondary fuel to the intake air stream of an internal combustion engine that normally is supplied with liquid primary fuel using the above described control valve involves the steps of supplying the gaseous secondary fuel to the engine air intake stream in accordance with a desired air to secondary fuel ratio during normal engine operation by using the movable air flow responsive member in the direct path of the engine air intake stream to control the position of the movable gas valve element in the gas fuel supply system, and progressively closing the gas valve element as engine speed controller approaches its idle or off position without disturbing or moving the air flow responsive member, so engine intake air can continue to displace the air flow responsive member without causing opening of the gas valve.

An embodiment of the invention will now be described by way of example with reference to the accompanying drawings in which:—

Fig. 1 is a schematic representation of the dual fuel system according to the present invention;

Fig. 2 is a top view of the gas injection metering valve of the present invention;

Fig. 3 is a side view, in cross section, of the metering valve; and

Fig. 4 is a schematic representation of a control system.

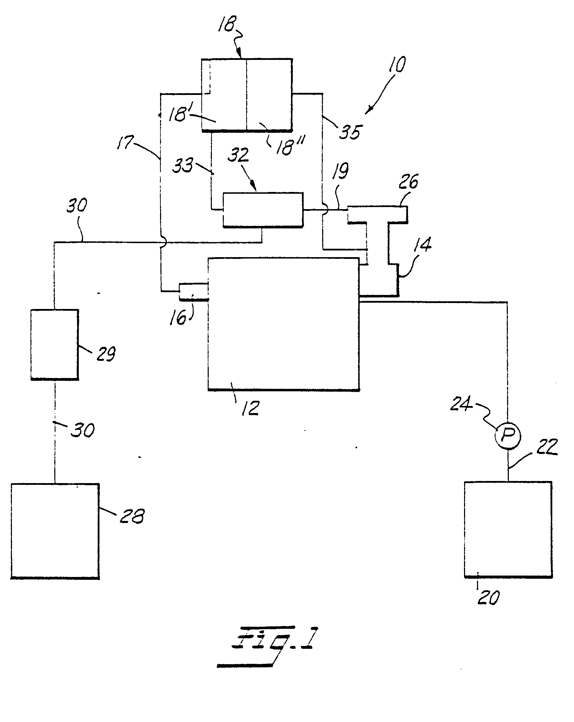

Referring to Fig. 1 reference numeral 10 indicates a schematic representation of a dual fuel system. Internal combustion engine 12 has an air intake conduit or manifold 14 and an exhaust manifold 16. Connected between the manifolds 14—16, is a turbocharger 18 with an intake side 18′ and a compression discharge side 18″. A supply tank 20 containing liquid primary fuel supplies the liquid fuel to a fuel injection system

2

(not shown) for injection to the combustion chambers (not shown) via a conduit 22, and a pump 24. An air cleaner 26 is mounted on the engine in any well known manner and is adapted to deliver air so as to ensure the proper air/primary fuel ratio for combustion within engine 12 and also, by conduit 19 to the mixing valve 32. A gas secondary fuel supply is indicated at 28 and is connected by conduit 30 to a vaporizer/pressure regulator 29, for vaporizing the gas, and to the gas fuel mixing valve 32. The valve 32 is arranged so as to receive all the intake air demanded by the engine and, when actuated, to transmit the air/gas fuel vapor mixture to the turbocharger 18 via conduit 33. The turbocharger 18 is driven by exhaust gas from the exhaust manifold 16 via conduit 17 or, alternatively, by any well known manner. The compression side 18″ supplies the mixture to the intake manifold 14 via conduit 35. The valve unit 32 is designed to meter the gas fuel in proportion to the air demanded by throttle operation as will be explained in further detail below.

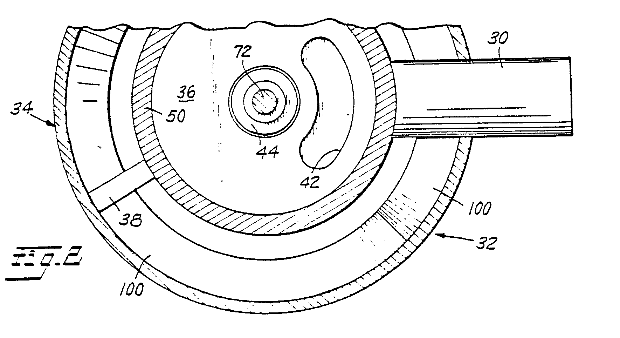

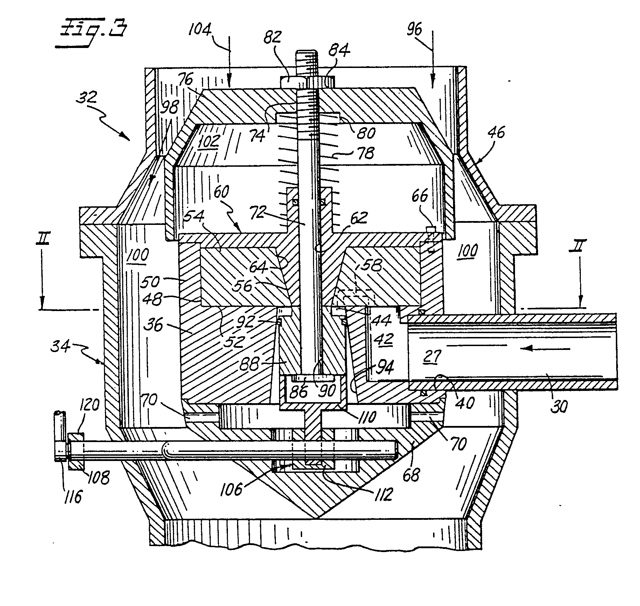

Fig. 2 is a top sectional view taken along the lines II—II in Fig. 3. The valve housing is shown at 34 and supports a valve body 36 by a three-post mounting arrangement, one of which is shown at 38. The gas fuel inlet conduit 30 is received within an opening 40 of the valve body 36. As shown, the body member 36 has a gas entrance passageway 42 for receiving the gas fuel supply from the conduit 30. The duct 42 communicates with a central aperture 44 in the valve body 36 by passages 58.

The valve unit 32, shown in Fig. 3, may be contained within a two-part casing 34, 46. The valve body assembly 36 defines an L-shaped area, when viewed in cross section, which is defined by a vertically extending wall portion 50 and a horizontally extending ledge portion 52. The area can be open or support a valve passage block 54. The block 54 may be provided with converging side walls 56 which define a centrally located, circular aperture. The passage block 54 also defines a plurality of gas passages, one of which is shown at 58, which allows the gas fuel to communicate between gas entrance passage 42 and the central body aperture 44 of the valve body assembly 36. A valve cover assembly 60 is provided with a central aperture 62 and converging side walls 64. The sides walls 64 and 56, of the cover and block, respectively, are mounted in flush engagement with each other. The valve cover 60 may be secured to the vertically extending wall portions 50 of the valve body 36, by any known manner which ensures a tight seal. For purposes of illustration, a bolt attachment is shown at 66.

Secured to the base of the valve body assembly 36 is a cone-shaped orifice housing 68. As with the cover assemly 60, the orifice housing 68 may be secured to the body assembly 36 by a series of screws, not shown, arranged around the periphery of the housing 68. This arrangement would be similar to the attachment means 66 for the cover assembly 60. As will be described later, orifices 70 are provided for directing the gas fuel from the central aperture 44 into the air stream of the internal combustion engine 12.

Slidably mounted within the cover assembly 60 is a connector rod member 72. As shown in Fig. 3 one end of the member 72 is threadedly engaged at 74 with a movable air flow responsive member or metering valve 76. A spring member 78 biases the air flow member 76 away from the valve cover element 60, or towards a direction upstream of the air flow direction shown by arrows 96. The spring 78 is concentric to the rod 72 and one end is seated within valve element 76 defined by a shoulder 80. The other end of the spring 78 is seated against the cover 60. An adjusting member 82 is threadedly engaged with the shaft 72 and contacts the valve element 76 at 84. The adjusting member 82 allows the relative position of the metering valve 76 to be changed on shaft 72 by loosening the adjustment means 82 and threading the metering valve 76 up or down on rod 72. This changes the relative position of the air flow responsive element 76 with respect to the housing 46.

At the opposite end of the threaded section 74 of the connector rod 72 is a stop member 86. The stop member 86 supports and positions a gas valve element 88 through a lost motion connection. The valve element 88 has a central aperture 90 to allow the valve stem 72 to pass therethrough. Circumferentially surrounding the valve element 88 at its topmost portion of largest radius is an O-ring 92. When the valve 88 is in its closed position, i.e., when it does not allow gas to pass into the air stream of the engine, the O-ring 92 sealingly engages with the tapered side walls of the main valve body 36.

The valve element 88 is acted on by the gas fuel pressure on its upper side and manifold vacuum on its lower side so that it follows downward travel of the air flow responsive member 76 to open the gas fuel passage 94 when intake air moves the valve member 76 in the direction of arrows 96. Upward travel of stop member 86, however, carries the valve element 88 upwardly to a closed position when the valve member 76 is biased upwardly by the spring 78 when intake air flow is small.

In operation, the mixing valve unit 32 is designed to supply secondary gas fuel that has been vaporized into the intake manifold of an internal combustion engine, for example a diesel engine. The unit is designed to meter the gas in proportion to the air demanded by the engine as determined by engine speed. In the normal mode of use, the flow of diesel or liquid fuel is appropriately reduced when gas fuel is supplied so that a suitable total air to fuel ratio is obtained for the charge supplied to the combustion chamber of the engine. Air enters the valve unit 32 in the direction of arrow 96, and passes the air flow responsive member 76 in the direction of arrow 98 into the cylindrical chamber 100. A pressure drop around member 76 occurs and the air directly strikes member 76. Thus, when air is demanded by the engine, air motion causes a force in the direction of arrow 104 and compresses spring 78 as air flow member 76 is driven in the direction of arrow 104 by the air stream. Member 76 will open until a balance is reached between the force of the air and spring force in spring 78. The position of the member 76 controls the open position of the gas control valve 88. As the engine demands more air, the valve 88 is permitted to be moved, and, indeed is forced down along the diverging walls of the gas fuel passage 94 of the valve body 36 by gas pressures. The further the valve 88 is forced down the tapered passage, the more gas is allowed to pass from the gas passage 27, through the gas passageway 58, to the gas passage 44 of the valve body 36. The gas vapors then enter the conduit 33 through the orifices 70 to mix with the intake air stream. After compression in the turbocharger 18, the mixture is introduced into the intake manifold 14 of the engine 12 for supply to the air intake ports of the engine. As previously discussed, the relative positioning of the air flow responsive member 76 can be changed on rod 72 by loosening the fastening means 82 so as to change the relationship between member 76 and housing 46. Accordingly, this changes the point when the secondary gas injection is to start entering the intake airstream. Accordingly, it is to be understood that the system has two modes of operation, i.e., primary liquid fuel alone or a combination of liquid fuel and secondary gaseous fuel.

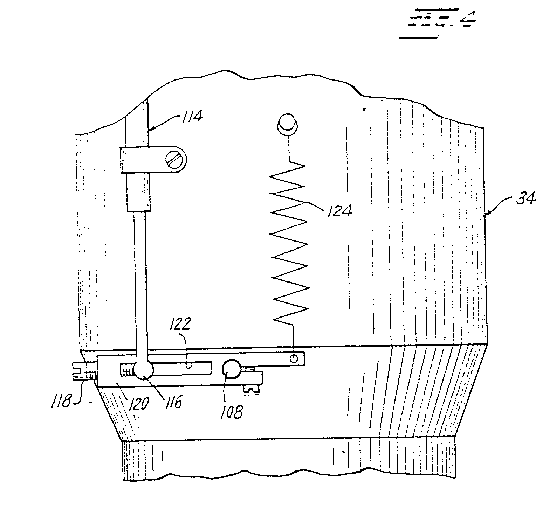

Figs. 3 and 4 further show a mechanism by which the gas valve 88 is independently controlled. A crank and lever assembly, for independently controlling the opening and closing of the gas passage 44 by the valve element 88 is indicated generally at 106. The assembly 106 is rotationally attached to a shaft 108 which, in turn, is operatively connected to the engine speed controller (throttle) in a manner to be explained below. Although the term "throttle" may be used herein in connection with a diesel engine that is fuel injected (unthrottled air except possibly at idle) it is intended to refer generally to the means by which the speed of the engine is controlled.

The crank assembly and shaft 106, 108, respectively, are positioned within the cone-shaped orifice housing 68. The assembly 106 consists of a yoke member 110 fixedly attached to the shaft 108 and a stop member 112. The yoke assembly 110 slidably engages the bottom surface area of the valve element 88 so as to control its reciprocating movement within the tapered passage 94. The rotational movement of the shaft 108 is controlled by a cable 114 connected to the engine speed controller (not shown). An end 116, of the cable 114 is attached to the crank lever assembly 106 by an adjustment member 118. The adjustment member 118 is threadedly engaged with a control arm 120. The control arm 120 has a slot 122 which allows the cable end 116 to be attached to the screw 118. Further, the stop 112 determines the maximum and minimum rotational movement of shaft 108 and hence, the maximum and minimum reciprocating travel of the gas valve 88, which in turn determines the percentage of secondary gas entering into the intake airstream of the engine. A spring 124 functions as the return spring for the crank assembly 106. This spring 124 urges the gas valve towards a closed position when the speed controller approaches its idle or off position.

In operation, the valve element 88 is held in a closed position by the spring 124 until the cable 114 is actuated by advancing the speed controller. Once the cable 114 is actuated, the crank arm 120 rotates shaft 108 and with it, yoke 110. The rotational movement of the yoke 110 allows the valve element 88 to move to an open position by the force of gas pressure and vacuum and an amount of secondary gas, determined by the adjustment of screw 118, enters the turbocharger 18 and the engine 12, as previously discussed. The yoke 110 thus is seen to work in the manner of a cam and follower when it engages the bottom of valve 88, at least when the cable 114 is moved towards an idle or off position.

**Claims**

1. A control valve (32) for a gas fuel supply to an internal combustion engine (12) including an air intake conduit means (19, 33, 35) including a valve housing (46) including an air duct extending through the housing and having inlet and outlet ends, the housing (46) being arranged to be connected to said air intake conduit means so that the outlet of the air duct is in communication with the conduit leading to the engine; a movable air flow responsive member (76) in said duct arranged to be deflected in a first direction by forces resulting from air flowing through said duct towards the outlet end thereof; means (78) for resiliently biasing said air flow responsive member in a direction opposite to said first direction towards a nondeflected position; a gas fuel inlet (30) into the housing; a gas fuel passageway (42, 58) in the housing providing communication between said gas fuel inlet and said air intake conduit; a valve element (88) for controlling gas flow through said passageway, said valve element (88) being connected to the flow responsive member (76) and being movable between closed and open positions in response to the movement of said air flow responsive member (76) between undeflected and deflected positions, respectively; characterized in that the connection between the valve element (88) and the flow responsive member (76) allows movement independently of the air flow responsive member (76) movement between the closed position of the valve element (88) and a position defined by the deflected position of the air flow responsive member (76); and in that a valve element control (108, 110) is provided for moving said valve element towards and maintaining same at a closed position independently of said biasing means without interference with the movement of said air flow responsive member.

2. A control valve as claimed in claim 1 characterized in that said valve element (88) is connected to said air flow responsive member (76) by a lost motion connection (86, 90) that permits said valve element to move towards an open position when said air responsive member is deflected, but positively drives the valve towards a closed position when said air responsive member is moved into its undeflected position.

3. A control valve as claimed in claim 2 characterized in that said lost motion connection (86, 90) includes a rigid rod connector (72) extending between said air flow responsive member (76) and said valve element (88), with said rod connector engaging said valve element so that the rod connector can move independently of the valve element when the rod connector moves in one direction in response to deflection of said air responsive member but directly engages and carries the valve element with said rod connector when the rod connector is moved in the reverse direction, at least as said air responsive member approaches it undeflected, at-rest position.

4. A control valve as claimed in claim 3 characterized in that said air flow responsive member (76) and rod connector (72) are connected together for simultaneous movement in a rectilinear direction within said duct when said air flow responsive member is deflected; said valve element likewise is movable rectilinearly between open and closed positions; said valve element (88) is mounted on and supported by said rod through a sliding connection; said rod has a laterally enlarged valve element engaging means (86) adjacent its distal end; and said valve element engaging means retains said valve element assembled to said rod and serves to directly engage and carry the valve element when the rod is moved in said reverse direction by limiting the endwise sliding motion of said valve element along said rod.

5. A control valve as claimed in any preceding claims characterized in that said valve element control comprises movable means (108, 120) secured to said housing and is actuatable from the exterior of the housing.

6. A control valve as claimed in claim 5 characterized in that said valve element control includes a biasing element (124) for said valve control to urge the control in a direction to drive said valve element towards a closed position.

7. A control valve as claimed in claim 6 characterized in that said valve element is a linearly movable plug in an elongated tapered valve port (94) that is in communication with said gas fuel inlet at one end and said air duct at its other end, and said valve element control means comprises a cam member (110) directly engageable with said valve element, and in that means (108, 114, 120) are provided for moving said cam member so that movement of said cam member in a single direction causes progressive linear movement of said valve element towards a closed position.

8. A control valve as claimed in any preceding claim in combination with an internal combustion engine having an air intake supply conduit (19, 33, 35) and a speed controller for controlling engine speed and power, said speed controller being movable between open and closed positions, said control valve being connected to said conduit so that substantially all of the engine intake air passes through said duct (100), characterized in that said valve element control comprises a connection (114) between said speed controller and said valve element to be urged towards a closed position when said speed controller is moved towards a closed position.

9. A control valve as claimed in claim 8 characterized in that said connection includes an arrangement (118, 122) for varying the relationship between speed controller position or motion and output valve element control position or motion.

10. A control valve as claimed in any of claims 1 to 7 in combination with a diesel-type internal combustion engine having an air intake supply conduit in communication with air intake ports of said engine, and an injector-type primary liquid fuel supply system; characterized in that said control valve is connected to said air intake supply conduit so that all of the engine intake air passes through the duct of said control valve and said air intake supply conduit.

11. A control valve as claimed in claim 10 including an intake air pressurizer (18) controllable in response to engine speed in said air intake supply conduit, characterized in that the air pressurizer is located between said control valve and said engine air intake ports.

12. A control valve as claimed in claim 1 characterized in that said air pressurizer (18) comprises an engine exhaust gas driven turbocharger.

13. A method for controlling the supply of gaseous secondary fuel to the intake air stream of an internal combustion engine that normally is supplied with a liquid primary fuel using a control valve according to any of claims 1—7, characterized by the steps of

a) supplying gaseous secondary fuel to the engine air intake stream in accordance with a desired air to secondary fuel ratio during normal engine operation by using the movable air flow responsive member in the direct path of the engine air intake stream to control the position of the movable gas valve element in the gas fuel supply system; and

b) progressively closing the gas valve element as the engine speed controller approaches its idle or off position without disturbing or moving the air flow responsive member, so engine intake air can continue to displace the air flow responsive member without causing opening of the gas valve.

14. A method as claimed in claim 13 wherein the engine is a diesel primary fuel injected engine, characterized by passing all of the engine intake air through the gas fuel control valve housing and permitting the air flow responsive member to be deflected by said air stream continuously during engine operation.

**Patentansprüche**

1. Steuerventil (32) für die Zufuhr von Gasbrennstoff zu einer Brennkraftmaschine (12), mit einer Lufteinlaßanordnung (19, 33, 25) mit einem Ventilgehäuse (46), das einen sich durch das Gehäuse hindurch erstreckenden und mit Einlaß- und Auslaßende ausgestatteten Luftkanal enthält, wobei das Gehäuse (46) so ausgebildet ist, daß es derart an die Lufteinlaßanordnung anschließbar ist, daß der Auslaß des Luftkanals in Verbindung steht mit der zu der Maschine führenden Leitung; einem beweglichen, luftströmungsempfindlichen Element (76) innerhalb des Kanals, welches so angeordnet ist, daß es durch Kräfte, die aus Luftströmungen durch den Kanal zu dessen Auslaßbende hin resultieren, in eine erste Richtung ausgelenkt wird; einer Einrichtung (78) zum elastischen Vorspannen des luftstromempfindlichen Elements entgegen der ersten Richtung in eine nicht-ausgelenkte Lage; einem in das Gehäuse führenden Gasbrennstoffeinlaß (30); einem Gasbrennstoff-Durchgang (42, 58) innerhalb des Gehäuses, der eine Verbindung zwischen dem Gasbrennstoffeinlaß und der Lufteinlaßanordnung darstellt; einem Ventilelement (88) zum Steuern des Gasstroms durch den Durchgang, wobei das Ventilelement (88) mit dem luftstromempfindlichen Element (76) verbunden ist und ansprechend auf die Bewegung des luftstromempfindlichen Elements (76) zwischen nicht-ausgelenkten und ausgelenkten Positionen beweglich ist zwischen geschlossenen und geöffneten Stellungen, dadurch gekennzeichnet, daß die Verbindung zwischen dem Ventilelement (88) und dem strömungsempfindlichen Element (76) eine Bewegung unabhängig von der Bewegung des luftstromempfindlichen Elements (76) zwischen der geschlossenen Stellung des Ventilelements (88) und einer Stellung erlaubt, die definiert wird durch die ausgelenkte Position des luftstromempfindlichen Elements (76), und daß eine Ventilelementsteuerung (108, 110) vorgesehen ist, um das Ventilelement in Richtung auf eine geschlossene Stellung zu bewegen und da zu halten, unabhängig von der Vorspanneinrichtung, ohne daß eine Kollision mit der Bewegung des luftstromempfindlichen Elements erfolgt.

2. Steuerventil nach Anspruch 1, dadurch gekennzeichnet, daß das Ventilelement (88) mit dem luftstromempfindlichen Element (76) durch eine Bewegungsspielverbindung (86, 90) verbunden ist, welche es ermöglicht, daß das Ventilelement sich in Richtung auf eine geöffnete Stellung bewegt, wenn das luftempfindliche Element ausgelenkt wird, hingegen das Ventil zwangsgesteuert in Richtung auf eine geschlossene Stellung bewegt, wenn das luftempfindliche Element in seine nicht-ausgelenkte Lage bewegt wird.

3. Steuerventil nach Anspruch 2, dadurch gekennzeichnet, daß die Bewegungsspielverbindung (86, 90) eine starre Stangenverbindung (72) aufweist, die sich zwischen dem luftstromempfindlichen Element (76) und dem Ventilelement (88) erstreckt, wobei die Stangenverbindung mit dem Ventilelement derart in Eingriff steht, daß die Stangenverbindung sich unabhängig vom Ventilelement bewegen kann, wenn die Stangenverbindung sich in eine Richtung ansprechend auf die Auslenkung des luftempfindlichen Elements bewegt, hingegen direkt mit dem Ventilelement in Eingriff kommt und dieses mit der Stangenverbindung trägt, wenn die Stangenverbindung in die umgekehrte Richtung bewegt wird, zumindest dann, wenn das luftempfindliche Element sich der nicht-ausgelenkten, Ruheposition nähert.

4. Steuerventil nach Anspruch 3, dadurch gekennzeichnet, daß das luftstromempfindliche Element (76) und die Stangenverbindung (72) für eine gleichzeitige, geradlinige Bewegung innerhalb des Kanals bei Auslenkung des luftstromempfindlichen Elements verbunden sind, daß das Ventilelement gleichermaßen geradlinig zwischen geöffneter und geschlossener Stellung bewegbar ist, daß das Ventilelement (88) über eine Gleitverbindung auf der Stange montiert und von dieser gelagert wird, daß die Stange ein seitlich vergrößertes Ventilelement-Eingriffsteil (86) an ihrem fernen Ende aufweist, und daß das Ventilelement-Eingriffsteil das an der Stange montierte Ventilelement hält und dazu dient, direkt mit dem Ventilelement in Eingriff zu kommen und dieses zu tragen, wenn die Stange in umgekehrter Richtung bewegt wird, indem die endseitige Gleitbewegung des Ventilelements entlang der Stange begrenzt wird.

5. Steuerventil nach einem der vorhergehenden Ansprüche, dadurch gekennzeichnet, daß die Ventilelementsteuerung an dem Gehäuse festgelegte bewegliche Mittel (108, 120) aufweist und von außerhalb des Gehäuses her betätigbar ist.

6. Steuerventil nach Anspruch 5, dadurch gekennzeichnet, daß die Ventilelementsteuerung ein Vorspannelement (24) für die Ventilsteuerung aufweist, um die Steuerung in eine Richtung zu drängen, in der das Ventilelement in Richtung auf die geschlossene Stellung bewegt wird.

7. Steuerventil nach Anspruch 6, dadurch gekennzeichnet, daß das Ventilelement ein linear bewegbarer Stopfen in einem länglichen konischen Ventilsitz (94) ist, welcher in Verbindung steht mit dem Gasbrennstoffeinlaß an einem Ende und mit dem Luftkanal am anderen Ende, daß die Ventilelementsteuereinrichtung ein direkt mit dem Ventilelement in Eingriff bringbares Steuerkurvenelement (110) aufweist, und daß Mittel (108, 114, 120) vorgesehen sind, um das Steuerkurvenelement derart zu bewegen, daß die Bewegung des Steuerkurvenelements in einer einzigen Richtung eine progressive Linearbewegung des Ventilelements in Richtung auf die Schließstellung veranlaßt.

8. Steuerventil nach einem der vorhergehenden Ansprüche in Verbindung mit einer Brennkraftmaschine, die eine Lufteinlaßanordnung (19, 33, 35) und eine Drehzahlregelung zum Regeln der Motordrehzahl und -leistung aufwesit, wobei die Drehzahlregelung bewegbar ist zwischen einer geöffneten und einer geschlossenen Stellung, während das Steuerventil derart an die Lufteinlaßanordnung angeschlossen ist, daß im wesentlichen sämtliche Motor-Ansaugluft durch den Kanal (100) gelangt, dadurch gekennzeichnet, daß die Ventilelementsteuerung eine Verbindung (114) zwischen der Drehzahlregelung und dem Ventilelement aufweist, derart, daß sie in Richtung auf die geschlossene Stellung gedrängt wird, wenn die Drehzahlregelung in Richtung Schließstellung bewegt wird.

9. Steuerventil nach Anspruch 8, dadurch gekennzeichnet, daß die Verbindung eine Anordnung (118, 122) aufweist zum Variieren der Beziehung zwischen Stellung oder Bewegung der Drehzahlregelung und Ausgangsposition oder -bewegung der Ventilelementsteuerung.

10. Steuerventil nach einem der Ansprüche 1 bis 7 in Verbindung mit einer Diesel-Brennkraftmaschine, umfassend eine Lufteinlaßanordnung, die in Verbindung steht mit den Lufteinlässen der Maschine, und ein Primär-Flüssigbrennstoff-Einspritzsystem, dadurch gekennzeichnet, daß das Steuerventil mit der Lufteinlaßanordnung in Verbindung steht, derart, daß sämtliche Maschinen-Ansaugluft durch den Kanal des Steuerventils und die Lufteinlaßanordnung strömt.

11. Steuerventil nach Anspruch 10, mit einem ansprechend auf die Motordrehzahl steuerbaren Ansaugluft-Druckerzeuger (18) innerhalb der Lufteinlaßanordnung, dadurch gekennzeichnet, daß der Luft-Druckerzeuger sich zwischen dem Steuerventil und den Motor-Lufteinlässen befindet.

12. Steuerventil nach Anspruch 1, dadurch gekennzeichnet, daß der Luft-Druckerzeuger (18) einen durch Motorauspuff-Gas angetriebenen Turbolader aufweist.

13. Verfahren zum Steuern der Zufuhr gasförmigen Sekundär-Kraftstoffs zu dem Ansaugluftstrom einer Verbrennungsmaschine, die normalerweise mit einem flüssigen Primär-Kraftstoff gespeist wird, wobei ein Steuerventil nach einem der Ansprüche 1 bis 7 verwendet wird, gekennzeichnet durch die Schritte:

a) Zuführen von gasförmigem Sekundär-Kraftstoff zu dem Motor-Luftansaugstrom nach Maßgabe eines gewünschten Luft/Sekundär-Brennstoff-Verhältnisses während des normalen Motorbetriebs, indem das bewegliche luftstromempfindliche Element in dem direkten Weg des Motor-Luftansaugstroms dazu verwendet wird, die Lage des beweglichen Gasventilelements in dem Gaskraftstoff-Zuführsystem zu steuern; und

b) progressives Schließen des Gasventilelements, wenn sich die Motordrehzahlsteuerung der Leerlauf- oder AUS-Position annähert, ohne daß das luftstromempfindliche Element gestört oder bewegt wird, damit die Motor-Ansaugluft das luftstromempfindliche Element fortgesetzt versetzen kann, ohne daß ein Öffnen des Gasventils veranlaßt wird.

14. Verfahren nach Anspruch 13, bei dem der Motor ein Dieselmotor mit Primär-Kraftstoff-Einspritzung ist, dadurch gekennzeichnet, daß sämtliche Motor-Ansaugluft durch das Gasbrennstoff-Steuerventilgehäuse hindurchgelassen und ermöglicht wird, daß das luftstromempfindliche Element von dem Luftstrom während des Motorbetriebs dauernd ausgelenkt wird.

**Revendications**

1. Vanne de commande (32) pour l'alimentation en carburant gazeux d'un moteur à combustion interne (12) comprenant une conduite d'admission d'air (19, 33, 35) avec un corps de vanne (46) qui présente un conduit d'air traversant le corps et possédant une extrémité d'entrée et une extrémité de sortie, le corps de vanne (46) étant agencé pour être raccordé à la conduite d'admission d'air de manière que la sortie du conduit d'air communique avec la partie de la conduite menant au moteur, une pièce mobile (76) sensible à l'écoulement d'air étant disposée dans ce conduit de manière à pouvoir être déviée dans une première direction par des forces résultant de l'écoulement d'air à travers ce conduit vers son extrémité de sortie; un moyen (78) pour rappeler élastiquement cette pièce sensible à. l'écoulement d'air dans une direction opposée à ladite première direction vers une position non déviée ou position de repos de la pièce; une arrivée de carburant gazeux (30) dans le corps de vanne; un passage de carburant gazeux (42, 58) ménagé dans le corps de vanne pour établir une communication entre l'arrivée de carburant gazeux et la conduite d'admission d'air; un clapet (88) pour contrôler l'écoulement de gaz à travers ce passage, ce clapet (88) étant relié à la pièce sensible à l'écoulement d'air (76) et étant déplaçable entre une position fermée et une position ouverte en réponse au mouvement de cet élément sensible à l'écoulement d'air (76) entre sa position de repos et sa position déviée; caractérisée en ce que la liaison entre le clapet (88) et l'élément sensible à l'écoulement d'air (76) permet, indépendamment du mouvement de l'élément sensible à l'écoulement d'air (76), le déplacement du clapet (88) entre sa position fermée et une position définie par la position déviée de l'élément sensible à l'écoulement d'air (76); et qu'une commande de clapet (108, 110) est prévue pour déplacer le clapet vers une position fermée et pour l'y maintenir, indépendamment dudit moyen de rappel, sans interférence avec le mouvement de la pièce sensible à l'écoulement d'air.

2. Vanne selon la revendication 1, caractérisée en ce que le clapet (88) est relié à la pièce sensible à l'écoulement d'air (76) par une liaison à course morte (86, 90) qui permet à ce clapet de se déplacer vers une position ouverte lorsque la pièce sensible à l'écoulement d'air est déviée, mais qui amène le clapet par force vers une position fermée lorsque la pièce sensible à l'écoulement d'air est déplacée à sa position de repos.

3. Vanne selon la revendication 2, caractérisée en ce que le liaison à course morte (86, 90) comporte une tige rigide de liaison (72) qui s'étend entre la pièce sensible à l'écoulement d'air (76) et le clapet (88), la tige agissant sur le clapet de manière que la tige puisse se déplacer indépendamment du clapet lorsqu'elle se déplace dans une direction en réponse à la déviation de la pièce sensible à l'écoulement d'air, mais qu'elle vienne directement en contact avec le clapet et porte celui-ci lorsque la tige est déplacée en sens contraire, tout au moins lorsque la pièce sensible à l'écoulement d'air s'approche de sa position de repos.

4. Vanne selon la revendication 3, caractérisée en ce que la pièce sensible à l'écoulement d'air (76) et la tige de liaison (72) sont reliées ensemble pour se déplacer simultanément dans une direction linéaire à l'intérieur dudit conduit lorsque la pièce sensible à l'écoulement d'air est déviée; le clapet est déplaçable de façon analogue suivant une ligne droite entre sa position ouverte et sa position fermée; le clapet (88) est monté sur la tige et est supporté par elle avec inteposition d'une liaison à glissement; la tige possède, près de son extrémité libre, un moyen (86) élargi latéralement, qui est destiné à s'appliquer contre le clapet; et ce moyen maintient le clapet en liaison avec la tige et sert à venir s'appliquer directement contre le clapet et à porter celui-ci lorsque la tige est déplacée dans ladite direction contraire, en limitant le glissement longitudinal du clapet le long de la tige.

5. Vanne selon l'une quelconque des revendications précédentes, caractérisée en ce que la commande de clapet comporte un moyen mobile (108, 120) attaché au corps de vanne et est manoeuvrable de l'extérieur de ce corps.

6. Vanne selon la revendication 5, caractérisée en ce que la commande de clapet comporte un élément de rappel (124) pour charger cette commande dans le sens de l'entraînement du clapet vers une position fermée.

7. Vanne selon la revendication 6, caractérisée en ce que le clapet est réalisé sous forme d'un bouchon déplaçable linéairement dans un orifice de vanne (94) ayant la forme d'un cône allongé et qui communique par une extrémité avec l'arrivée de carburant gazeux et par son autre extrémité avec le conduit d'air, la commande de clapet comprenant une pièce (110) agissant comme une came et pouvant venir s'appliquer directement contre le clapet, et que des moyens (108, 114, 120) sont prévus pour déplacer la pièce formant came de manière que le mouvement de cette pièce dans une seule direction provoque le mouvement linéaire progressif du clapet vers une position fermée.

8. Vanne selon l'une quelconque des revendications précédentes en combinaison avec un moteur à combustion interne possédant une conduite d'admission d'air (19, 33, 35) formant conduite d'alimentation en air, de même qu'un organe de réglage de la vitesse pour régler la vitesse et la puissance du moteur, organe qui est déplaçable entre une position ouverte et une position fermée, la vanne de commande étant raccordée à la cónduite de manière que pratique-

ment tout l'air introduit dans le moteur traverse ledit conduit d'air (100), caractérisée en ce que la commande de clapet comporte une liaison (114) entre l'organe de réglage de la vitesse et le clapet pour amener ce dernier vers une position fermée lorsque l'organe de réglage de la vitesse est déplacé vers une position fermée.

9. Vanne selon la revendication 8, caractérisée en ce que ladite liaison comporte un dispositif (118, 122) pour varier la relation entre la position ou le mouvement de l'organe de réglage de la vitesse et la position ou le mouvement de la sortie de la commande de clapet.

10. Vanne selon l'une quelconque des revendications 1 à 7 en combinaison avec un moteur à combustion interne du type diesel, possédant une conduite d'alimentation en air communiquant avec les orifices d'entrée d'air du moteur, de même qu'un système d'alimentation du type à injecteurs pour un carburant primaire liquide; caractérisée en ce que la vanne de commande est raccordée à la conduite d'alimentation en air de manière que la totalité de l'air introduit dans le moteur passe à travers le conduit d'air de la vanne et à travers ladite conduite d'alimentation en air.

11. Vanne selon la revendication 10 combinée à un appareil (18) de compression de l'air entrant, appareil qui peut être commandé en fonction de la vitesse du moteur et est installé dans la conduite d'alimentation en air, caractérisée en ce que l'appareil de compression est disposé entre la vanne de commande et les orifices d'entrée d'air du moteur.

12. Vanne selon la revendication 11, caractérisée en ce que l'appareil de compression de l'air (18) est constitué par un turbocompresseur à suralimentation entraîné par les gas d'échappement du moteur.

13. Procédé pour commander l'introduction de carburant gazeux secondaire dans le flux d'air d'alimentation d'un moteur à combustion interne qui est normalement alimenté avec un carburant primaire liquide, avec utilisation d'une vanne de commande selon l'une quelconque des revendications 1 à 7, caractérisé par:

a) l'introduction de carburant secondaire gazeux dans le flux d'air d'alimentation du moteur en conformité avec un rapport air/carburant secondaire désiré pendant le fonctionnement normal du moteur, en utilisant la pièce mobile sensible à l'écoulement d'air, prévue directement dans le chemin du flux d'air alimentant le moteur, pour commander la position du clapet mobile d'admission de gaz dans le système d'alimentation en carburant gazeux; et

b) la fermeture progressive du clapet d'admission de gaz lorsque l'organe de réglage de la vitesse du moteur s'approche de sa position de ralenti ou d'arrêt, sans perturber ou déplacer la pièce sensible à l'écoulement d'air, de manière que l'air alimentant le moteur puisse continuer à déplacer cette pièce sensible à l'écoulement, mais sans que cela provoque l'ouverture du clapet d'admission de gaz.

14. Procédé selon la revendication 13, dans lequel le moteur est un moteur diesel à injection du carburant primaire, caractérisé en ce que la totalité de l'air alimentant le moteur traverse le corps de la vanne de commande d'admission du carburant gazeux, dans un agencement permettant le déplacement continu de la pièce sensible par le flux d'air d'alimentation pendant le fonctionnement du moteur.

Fig.1

_Fig.2_

Fig.3

_Fig. 4_